# EUROPÄISCHE PATENTANMELDUNG

(11) **EP 2 251 963 A2**
(43) Veröffentlichungstag der Anmeldung: **17.11.2010**
(21) Anmeldenummer: 10002600.4
(22) Anmeldetag: 12.03.2010
(51) Int. Cl.: H02K 49/04

(54) **Lagerlose Magnetkupplung mit Hystereserohr**

(30) Priorität: 12.05.2009 DE 102009020907
(71) Anmelder: Hartmann & König Stromzuführungs AG, 76676 Graben-Neudorf (DE)
(72) Erfinder: Herberger, Hubert, 76676 Graben-Neudorf (DE)
(74) Vertreter: Kesselhut, Wolf

(57) **Zusammenfassung**

Magnetkupplung (1) zur Beaufschlagung eines mit unterschiedlichen Geschwindigkeiten rotierbaren Bauteils, insbesondere einer Motor-Kabeltrommel eines Krans, mit einem Drehmoment, umfassend eine mit einer vorgegebenen Drehzahl über einen Antriebsmotor (4) antreibbare Antriebswelle (8), ein an einem Ende der Antriebswelle (8) drehfest an dieser aufgenommene Magnetanordnung (14), eine koaxial zur Antriebswelle (8) verlaufende und mit dem rotierbaren Bauteil antriebsmäßig koppelbare Abtriebswelle (10), und ein an dem der Magnetanordnung (14) zugeordneten Ende der Abtriebswelle (10) drehfest mit dieser verbundenes rohr- oder hülsenförmiges Hystereseelement (20), welches unter Bildung eines Luftspaltes (24) zur Magnetanordnung (14) derart angeordnet ist, dass infolge der Magnetkraftwirkung zwischen der Magnetanordnung (14) und dem Hystereseelement (20) bei einer Rotation der Antriebswelle (8) ein Drehmoment von der Antriebswelle (8) auf die Abtriebswelle (10) übertragen wird, sich **dadurch auszeichnend, dass** das rohr- oder hülsenförmige Hystereseelement (20) einen glockenförmigen Grundkörper (22) umfasst, in dessen Innenraum sich die Magnetanordnung (14) hinein erstreckt.

## Beschreibung

Die Erfindung betrifft eine Magnetkupplung zur Beaufschlagung eines mit unterschiedlichen Geschwindigkeiten rotierbaren Bauteils, insbesondere einer Motor-Kabeltrommel eines Krans, mit einem im Wesentlichen konstanten Drehmoment gemäß dem Oberbegriff von Anspruch 1.

Zum Antrieb von Kabeltrommeln von Kränen werden bekanntermaßen Magnetkupplungen eingesetzt, bei denen eine Hysteresescheibe über eine Antriebswelle von einem Antriebsmotor, z.B. einem mit einer festen Drehzahl rotierender Elektromotor, angetrieben wird. Die Hysteresescheibe ist in dichtem Abstand zu einer koaxial zur Hysteresescheibe rotierenden Magnetscheibe angeordnet, welch letztere über eine Abtriebswelle und ein zwischengeschaltetes Getriebe die Kabeltrommel antreibt und diese unabhängig davon, ob der Kran bewegt wird oder steht, mit einem im Wesentlichen konstanten Drehmoment beaufschlagt, um das Stromzuführungskabel des Krans unter Zugspannung zu halten. Um hierbei eine koaxiale Ausrichtung von Hysteresescheibe und Magnetscheibe sicher zu stellen, ist bei den bekannten Magnetkupplungen zwischen der Magnetscheibe und der Hysteresescheibe ein Stützlager angeordnet, über welches sich die Hysteresescheibe an der Magnetscheibe drehbar abstützt.

Hierbei ergibt sich das Problem, dass mit zunehmender Größe des Durchmessers einer Kabeltrommel die zum Antrieb derselben erforderliche Antriebsleistung erhöht werden muss, um die Trommel in gewohnter Weise beschleunigen zu können, wenn der Kran sich aus dem Stillstand in Bewegung setzt. Diese Antriebsleistung wird jedoch beim Stillstand des Krans nahezu vollständig in Wärme überführt, die in erster Linie im Bereich der Hysteresescheibe entsteht, welche sich demgemäß in der Praxis sehr stark erwärmt.

Wie die Anmelderin in diesem Zusammenhang gefunden hat, treten im Falle von Magnetkupplungen mit einem Durchmesser von 250 mm - mit denen die Erzeugung eines Drehmoments von ca. 38 Nm möglich ist - bei einer Drehzahl des Antriebsmotors von 900 U/min Temperaturen von mehr als 280°C auf, die in der Praxis dazu führen, dass das zwischen der Hysteresescheibe und der Magnetscheibe angeordnete Stützlager einem sehr hohen Verschleiß unterliegt und oftmals schon nach wenigen Tagen oder gar Stunden ersetzt werden muss.

Ein weiteres Problem ist es, dass sich die erforderlichen hohen Drehmomente nur mit sehr großen Durchmessern der Hysteresescheibe und der Magnetscheibe erreichen lassen. Weiterhin stellt es bisher ein ungelöstes Problem dar, dass eine genaue Einstellung des Drehmoments nicht möglich ist, da die Magnetfeldstärke über dem Spalt zwischen den Scheiben nicht linear zur Spaltbreite abnimmt, sondern dieser Prozess exponentiell verläuft.

Demgemäß ist es eine Aufgabe der vorliegenden Erfindung, eine Magnetkupplung zu schaffen, die bei einer vorgegebenen Drehzahl der Antriebswelle ein erhöhtes Drehmoment an der Abtriebswelle erzeugt und gleichzeitig keinen übermäßigen Verschleiß und keine Überhitzung der Kupplungsteile aufweist.

Diese Aufgabe wird erfindungsgemäß durch die Merkmale von Anspruch 1 gelöst.

Weitere Merkmale der Erfindung sind in den Unteransprüchen beschrieben.

Gemäß der Erfindung umfasst eine Magnetkupplung zur Beaufschlagung eines mit unterschiedlichen Geschwindigkeiten rotierbaren Bauteils, insbesondere einer Motor-Kabeltrommel eines Krans, mit einem Drehmoment, eine Antriebswelle, die durch einen Motor, insbesondere einen Drehstrom-Elektromotor, mit einer vorgegebenen Drehzahl angetrieben wird. Am freien Ende der Antriebswelle, welches dem Motor abgewandt ist, ist eine Magnetanordnung mit einem Durchmesser von bevorzugt höchstens 50 mm angeordnet, die z.B. über eine Keilverbindung drehfest mit der Antriebswelle verbunden ist.

Weiterhin umfasst die erfindungsgemäße Magnetkupplung eine koaxial zur Antriebswelle verlaufende und mit dem rotierbaren Bauteil antriebsmäßig koppelbare Abtriebswelle, die an dem der Magnetanordnung zugeordneten Ende der Abtriebswelle ein drehfest mit dieser verbundenes, beispielsweise rohr- oder hülsenförmiges Hystereseelement aufweist, welches unter Bildung eines Luftspaltes zur Magnetanordnung derart angeordnet ist, dass infolge der Magnetkraftwirkung zwischen der Magnetanordnung und dem Hystereseelement bei einer Rotation der Antriebswelle ein Drehmoment von der Antriebswelle auf die Abtriebswelle übertragen wird.

Nach dem der Erfindung zugrunde liegenden Gedanken weist das der Magnetanordnung zugeordnete Hystereseelement, welches einen glockenförmigen Grundkörper umfasst, an seinem der Abtriebswelle vorgelagerten Teil im Wesentlichen einen geringfügig größeren Innendurchmesser als der Außendurchmesser der Magnetanordnung, von bevorzugt mindestens 51 mm, auf und ist koaxial zur Magnetanordnung mit einem vorgegebenen Spaltabstand derart angeordnet, dass sich die Magnetanordnung bis in den Innenraum des Hystereseelements hinein erstreckt.

Bei der bevorzugten Ausführungsform der Erfindung enthält das Hystereseelement einen ringförmigen Einsatz, z.B. aus ferromagnetischem Metall, der in den Grundkörper des Hystereseelements, der beispielsweise aus normalem Stahl besteht, eingesetzt und mit diesem bevorzugt durch eine Klebeverbindung fest verbunden ist. Der Grundkörper ist am Ende einer mit der Antriebswelle fluchtenden Abtriebswelle befestigt, die z.B. über ein Getriebe auf das rotierbare Bauteil wirkt, um dieses mit einem Drehmoment vorgegebener Größe zu beaufschlagen, unabhängig davon, ob das Bauteil gerade rotiert oder sich im Stillstand befindet.

Durch den hieraus resultierenden Verlauf des Magnetfeldes in der radialen Ebene ergibt sich in besonders vorteilhafter Weise, dass die Antriebsachse und die Abtriebsachse keiner Kraft in axialer Richtung unterliegen. Dies schont in besonders günstiger Weise die Wellenlager im Antriebsmotor und die Stützlager im Getriebe, was andernfalls zu einem vorzeitigen Verschleiß der Lager führen kann.

Dadurch, dass das Magnetfeld radial zur Achse der Magnetanordnung verläuft und sich das magnetische Feld in axialer Richtung annähernd homogen über die Oberfläche der Magnetanordnung erstreckt, ergibt sich auf Grund der Anordnung des Hystereseelements um die Magnetanordnung herum der Vorteil, dass sich das übertragene Drehmoment im Wesentlichen proportional zur Eindringtiefe der Magnetanordnung in das Hystereseelement verhält und somit linear einstellbar und regelbar ist.

Bei der bevorzugten Ausführungsform der Erfindung weist das Hystereseelement auf seiner Außenseite Kühlrippen auf, über die die im Hystereseelement erzeugte Wärmeenergie an die Umgebungsluft abgegeben wird. Dies verhindert eine übermäßige Erwärmung und eine daraus resultierende geringfügige thermische Ausdehnung des Hystereseelements.

Hierbei ist es besonders von Vorteil wenn die Kühlrippen auf der Außenseite des Hystereseelements gewinde- oder rotorblattartig ausgebildet sind, so dass sie einen Kühlluftstrom erzeugen um die Kühlwirkung abermals zu erhöhen.

Gemäß der bevorzugten Ausführungsform der Erfindung besteht die Magnetanordnung zur Bildung eines im Wesentlichen zylindrischen Magnetkörpers aus Permanentmagneten, die auf der Außenseite eines mit der Antriebswelle verbundenen Trägerkörpers befestigt sind. Der Trägerkörper weist bevorzugt die Form eines geraden Prismas mit einer polygonalen, insbesondere achteckigen Querschnittsfläche auf, auf dessen Seitenflächen die Magnete insbesondere durch Verkleben oder Vernieten befestigt sind. Hierbei sind die Permanentmagnete bevorzugt derart angeordnet, dass je zwei benachbarte Permanentmagnete eine in radialer Richtung umgekehrte Polarität aufweisen.

Ein weiterer Gedanke der Erfindung, besteht darin, dass die Außenseite der Magnete eine kreisbogenförmige Krümmung besitzt, derart, dass die Außenflächen der Magnete entlang einer kreisförmigen Umfangslinie verlaufen, welche der Krümmung der die Magnetkraftwirkung aufnehmenden Innenfläche des Hystereseelements angepasst ist. Hieraus ergibt sich der Vorteil, dass sich der Spaltabstand, über welchen die magnetische Kraft übertragen wird, durch die der Innenseite des Hystereseelements angepasste Außenfläche der Magnetanordnung in vorteilhafter Weise verringert und die Ausnutzung der magnetischen Feldstärke und demgemäß das übertragenen Drehmoment erhöht wird.

Gemäß einem weiteren der Erfindung zugrunde liegenden Gedanken wird durch eine fliegende Lagerung der Antriebswelle mit der Magnetanordnung und der Abtriebswelle mit dem daran aufgenommenen Hystereseelement die Möglichkeit eröffnet, dass die Antriebswelle und die Abtriebswelle koaxial gegenüber liegend angeordnet werden können und sich somit die Magnetanordnung in vorteilhafter Weise in das Hystereseelement hinein erstreckt. Hieraus ergibt sich ebenfalls der Vorteil, dass durch den Entfall der sonst üblichen Stützlager die Anzahl an wartungsbedürftigen Bauteilen insgesamt reduziert wird.

Nach einem weiteren der Erfindung zugrunde liegenden Gedanken ist die Magnetanordnung in vorteilhafter Weise unmittelbar am freien Ende der Antriebswelle eines Elektromotors befestigt, der vorzugsweise ein mit einer konstanten festen Drehzahl umlaufender Drehstrom-Elektromotor ist. Hierdurch ergibt sich der Vorteil, dass die Anzahl der Komponenten der erfindungsgemäßen Magnetkupplung abermals reduziert wird, da die Lagerung der Antriebswelle durch die Wellenlager im Gehäuse des Elektromotors übernommen wird.

Weiterhin kann es vorgesehen sein, dass Verstellmittel vorgesehen sind um die Magnetanordnung oder das Hystereseelement zur Veränderung des übertragenen Drehmoments in axialer Richtung relativ zueinander zu verschieben. Hierdurch ergibt sich der Vorteil, dass eine genaue Einstellung des benötigten Drehmoments bei der Montage oder im Rahmen einer Wartung direkt am Bestimmungsort auch während des Betriebs bei laufender Magnetkupplung durchgeführt werden kann. In gleicher Weise wird hierdurch die Möglichkeit eröffnet, dass die Magnetkupplung auf ein gewünschtes Drehmoment eingestellt werden kann, welches z.B. vom Kranhersteller vorgegeben wird.

Gemäß einer weiteren Ausführungsform der Erfindung umfasst das Verstellmittel wenigstens eine Innengewindehülse sowie einen in diese einschraubbaren Abstandsbolzen, welche sich am Antriebsmotor und einem der Abtriebswelle zugeordneten Getriebe abstützen. Hierdurch wird in besonders vorteilhafter Weise die Möglichkeit eröffnet, dass der Kranführer mit nur wenigen Handgriffen das Drehmoment um einen gewünschten Wert verändern kann.

Weiterhin kann das Hystereseelement als eine drehfest mit der Abtriebswelle gekoppelte und axial zu dieser entlang einer Führung verschiebbare Hülse ausgebildet sein, auf die die Verstellmittel von außen her zum Verschieben derselben wirken. Hierbei ist es von Vorteil, wenn die Verstellmittel an einem an der Hülse angeordneten Lager zur Drehentkopplung angreifen, und eine ortsfeste Hebelanordnung umfassen, über welche die Hülse in axialer Richtung der Abtriebswelle bewegbar ist.

Weiterhin kann es nach der dieser Ausführungsform zugrunde liegenden Idee vorgesehen sein,
dass die Verstellmittel wenigstens eine an einem Drehpunkt befestigte Hebelanordnung, bevorzugt mit einer an deren dem Hystereseelement zugeordneten Ende angebrachten Gabel umfassen, welche manuell, bevorzugt über einen Bowdenzug und/oder automatisch betätigbar ist. Zur automatischen Betätigung der Hebelanordnung kann hierbei ein Abtastelement zum Erfassen des Wickeldurchmessers eines auf einer Kabeltrommel aufgewickelten Kabels vorgesehen sein, welches mechanisch oder hydraulisch mit der Hebelanordnung gekoppelt ist, um das über die Magnetkupplung übertragene Drehmoment in Abhängigkeit von dem momentanen Wickeldurchmesser zu verändern. Hierdurch wird in besonders vorteilhafter Weise die Möglichkeit geschaffen, die auf ein Kabel wirkende Zugkraft im Wesentlichen konstant zu halten.

Die Erfindung wird nachfolgend mit Bezug auf die Zeichnungen anhand einer bevorzugten Ausführungsform beschrieben.

In den Zeichnungen zeigt:
- Fig. 1: eine schematische Querschnittsdarstellung der bevorzugten Ausführungsform der erfindungsgemäßen Magnetkupplung,
- Fig. 2: eine schematische Querschnittsdarstellung des Magnetanordnung auf der Motorseite der erfindungsgemäßen Magnetkupplung, und
- Fig. 3: eine schematische Darstellung einer weiteren Ausführungsform der erfindungsgemäßen Magnetkupplung.

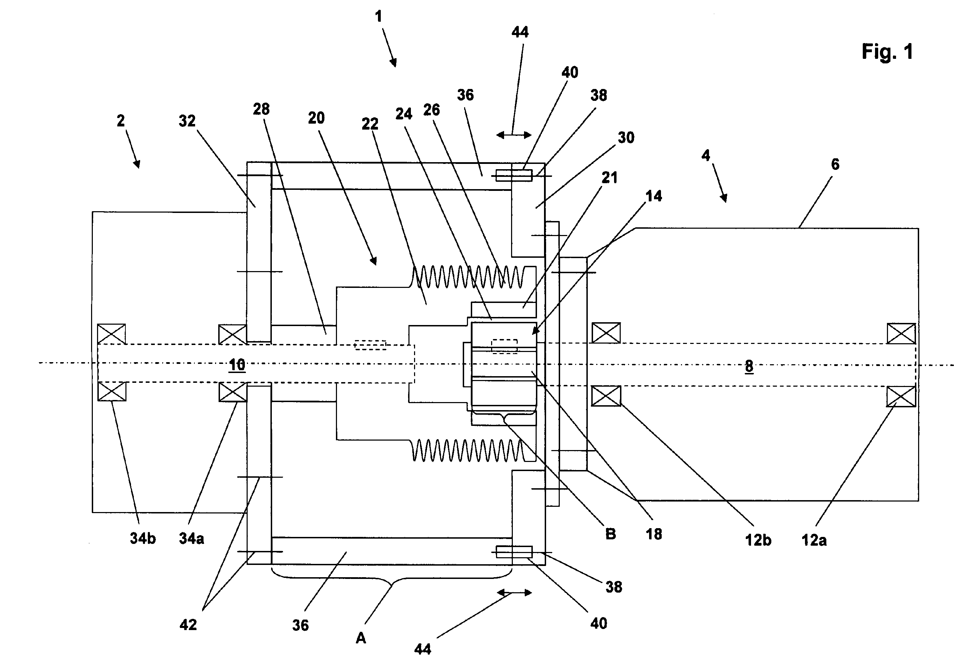

Wie in Fig. 1 gezeigt ist, umfasst eine erfindungsgemäße Magnetkupplung 1 zur Erzeugung eines Drehmoments, welches über ein Getriebe 2 auf ein rotierendes Bauteil in Form einer nicht näher gezeigten Motor-Kabeltrommel beispielsweise eines Krans übertragen wird, eine Antriebswelle 8, die durch einen Elektromotor 4, mit einer bevorzugt konstanten Drehzahl angetrieben wird. Bei der gezeigten Ausführungsform der Erfindung ist am freien Ende der Antriebswelle 8, welches vom Motor 4 abgewandt ist, eine Magnetanordnung14 befestigt, die einen Durchmesser von bevorzugt höchstens 50 mm besitzt und sich über eine Länge von bevorzugt 40 mm erstreckt. Die Magnetanordnung 14 ist über eine in der Zeichnung durch die nicht näher bezeichnete, schematisch angedeutete Keilverbindung drehfest mit der Antriebswelle 8 verbunden.

Wie der Darstellung von Fig. 1 weiterhin entnommen werden kann, ist die Magnetanordnung 14 auf der Antriebswelle 8 fliegend gelagert, wobei letztere bevorzugt unmittelbar die Welle des angeflanschten Elektromotors 4 ist, die sich innerhalb des Gehäuses 6 des Elektromotors 4 in bekannter Weise durch ein erstes und ein zweites Wellenlager 12a, 12b abstützt.

Die Magnetanordnung 14 ist unter Bildung eines Luftspalts 24 mit einer radialen Dicke von bevorzugt 0,5 mm von einem ringförmigen Einsatz 21 umschlossen, der einen Innendurchmesser von bevorzugt mindestens 51 mm aufweist. Der Einsatz 21 ist in einen glockenförmigen Grundkörper 22 eingesetzt und mit diesem fest verbunden. Der Grundkörper 22 ist ebenfalls über eine nicht näher bezeichnete Keilverbindung auf einer mit der Antriebswelle 8 fluchtenden Abtriebswelle 10 befestigt und ist auf seiner Außenseite mit Kühlrippen 26 versehen. Der Grundkörper 22 mit dem Einsatz 21 ist auf der Abtriebswelle 10, in gleicher Weise wie die Magnetanordnung 14 auf der Antriebswelle 8, fliegend gelagert, was bedeutet, dass sich zwischen dem Grundkörper 22 des Hystereseelements 20 und der Magnetanordnung 14 kein weiteres Stützlager befindet.

Die radiale Lagerung der Abtriebswelle 10 erfolgt gemäß der Darstellung von Fig. 1 hingegen durch ein erstes Stützlager 34a sowie ein zweites Stützlager 34b. Das erste Stützlager 34a ist hierbei im Bereich des Getriebeflansches 32 angeordnet und ist bevorzugt im Getriebe 2 befestigt, mit welchem die Abtriebswelle 10 antriebsmäßig gekoppelt ist, um die Drehzahl der Abtriebswelle 10 z.B. um einen Faktor 10 zu reduzieren und das über eine weitere nicht näher gezeigte Welle auf die Motor-Kabeltrommel übertragene Drehmoment entsprechend zu erhöhen.

Gemäß der Darstellung von Fig. 1 ist weiterhin hinter dem glockenförmigen Grundkörper 22 des Hystereseelements 20 eine Buchse 28 für die Getriebewelle 10 vorgesehen, die als Abstandspuffer zwischen dem Getriebeflansch 32 und dem Grundkörper 22 dient.

Der Bereich für die erfindungsgemäße Magnetkupplung 1 wird zwischen dem Getriebeflansch 32 und dem Motorflansch 30 durch die Abstandsbolzen 36 gebildet. Die Abstandsbolzen 36 sind hierbei fest mit dem Getriebeflansch 32 verbunden, bevorzugt mit den Schrauben 42 verschraubt. An dem Ende der Abstandsbolzen 36 welche dem Motorflansch 30 zugewandt sind, sowie auch im Motorflansch 30 sind Innengewindehülsen 40 mit Gewindebolzen 38 vorgesehen, die den Motorflansch 30 drehfest mit den Abstandsbolzen 36 verbinden und durch das Verstellen der Gewindebolzen 38 eine geringfügige axiale Verschiebung des Motorflansches 30 bewirken, um so die Magnetanordnung 14 dem Motorflansch 30 in seiner Verschiebung folgend aus dem Einsatz 21 des Hystereseelements 20 herauszuziehen. Dadurch wird die Breite B der Wirkfläche zwischen der Magnetanordnung 14 und dem ringförmigen Einsatz 21 eingestellt, und damit das übertragene Drehmoment beeinflusst.

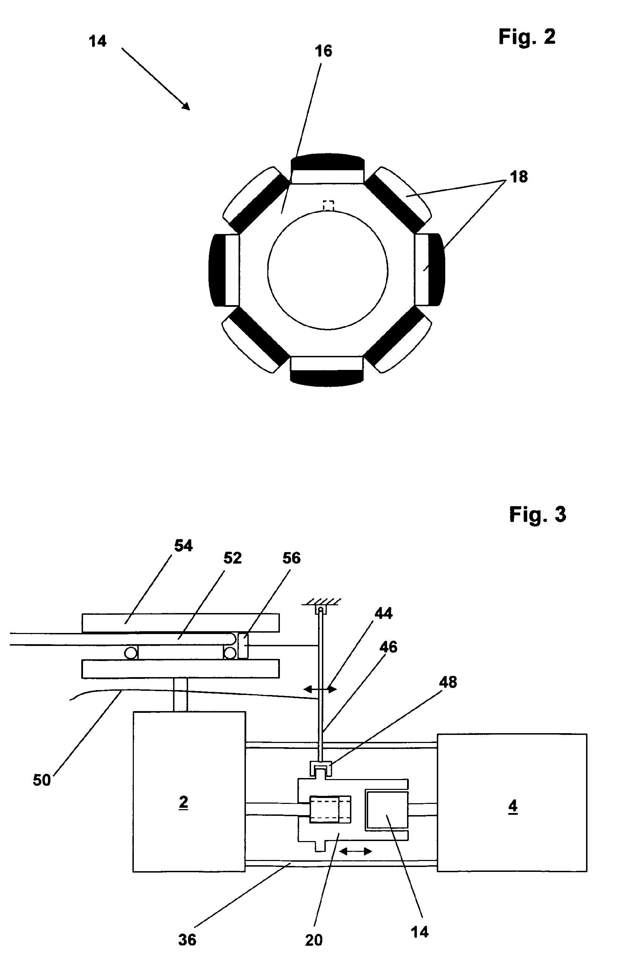

Wie der Darstellung von Fig. 2 entnommen werden kann umfasst die Magnetanordnung 14 der erfindungsgemäßen Magnetkupplung 1 einen im Querschnitt acht-seitigen Träger 16 auf dem acht Permanentmagnete 18 segmentweise bevorzugt durch Verkleben befestigt sind. Dabei sind die Permanentmagnete 18 so auf dem Träger 16 angebracht, dass sie ringsum mit ihrem magnetischen Nordpol abwechselnd nach außen und nach innen gerichtet sind.

Wie in Fig. 3 dargestellt ist, können Verstellmittel vorgesehen sein, um das Hystereseelement 20 zur Veränderung des übertragenen Drehmoments in axialer Richtung relativ zu der Magnetanordnung 14 zu bewegen. Bei dieser Ausführungsform der Erfindung ist das Hystereseelement 20 drehfest mit der Abtriebswelle 10 gekoppelt und als eine axial zu dieser entlang einer Führung verschiebbaren Hülse ausgebildet.

Wie der Darstellung von Fig. 3 weiterhin entnommen werden kann umfassen die Verstellmittel, eine an einem ortsfesten Drehpunkt befestigte Hebelanordnung 46, eine an deren dem Hystereseelement 20 zugeordneten Ende angebrachte Gabel 48 oder ein an der Hülse angeordnetes Lager zur Drehentkopplung, um das Hystereseelement 20 in axialer Richtung entlang der Abtriebswelle 10 zu verschieben.

Weiterhin kann es, wie in Fig. 3 schematisch angedeutet ist, vorgesehen sein, dass die Verstellmittel ein Abtastelement 56 zum Erfassen des Wickeldurchmessers umfassen, welches mechanisch oder hydraulisch mit der Hebelanordnung 46 gekoppelt ist, um das über die Magnetkupplung 1 übertragene Drehmoment in Abhängigkeit von dem momentanen Wickeldurchmesser eines auf eine Kabeltrommel 54 aufgewickelten Kabels 52 zu verändern. Ebenso kann es vorgesehen sein, dass die Verstellmittel manuell, bevorzugt über einen Bowdenzug 50 betätigbar sind.

### Liste der Bezugszeichen

- 1: erfindungsgemäße Magnetkupplung
- 2: Getriebe
- 4: Antriebsmotor
- 6: Gehäuse des Elektromotors
- 8: Antriebswelle
- 10: Abtriebswelle
- 12a: erstes Wellenlager
- 12b: zweites Wellenlager
- 14: Magnetanordnung
- 16: acht-seitiger Träger
- 18: Permanentmagnete
- 20: rohr- oder hülsenförmiges Hystereseelement
- 21: ringförmiger Einsatz aus ferromagnetischem Werkstoff
- 22: glockenförmiger Grundkörper
- 24: Luftspalt
- 26: Kühlrippen
- 28: Buchse für Getriebewelle
- 30: Motorflansch
- 32: Getriebeflansch
- 34a: erstes Stützlager
- 34b: zweites Stützlager
- 36: Abstandsbolzen
- 38: Gewindebolzen
- 40: Innengewindehülse
- 42: Schraube
- 44: Pfeil
- 46: Hebelanordnung
- 48: Gabel
- 50: Bowdenzug
- 52: Kabel
- 54: Kabeltrommel
- 56: Anlagefühler
- A: Abstand des Motorflansches zum Getriebeflansch
- B: Breite der Wirkfläche zwischen Magnetanordnung und Hystereserohr

## Patentansprüche

1. Magnetkupplung (1) zur Beaufschlagung eines mit unterschiedlichen Geschwindigkeiten rotierbaren Bauteils, insbesondere einer Motor-Kabeltrommel eines Krans, mit einem Drehmoment, umfassend eine mit einer vorgegebenen Drehzahl über einen Antriebsmotor (4) antreibbare Antriebswelle (8), ein an einem Ende der Antriebswelle (8) drehfest an dieser aufgenommene Magnetanordnung (14), eine koaxial zur Antriebswelle (8) verlaufende und mit dem rotierbaren Bauteil antriebsmäßig koppelbare Abtriebswelle (10), und ein an dem der Magnetanordnung (14) zugeordneten Ende der Abtriebswelle (10) drehfest mit dieser verbundenes rohr- oder hülsenförmiges Hystereseelement (20), welches unter Bildung eines Luftspaltes (24) zur Magnetanordnung (14) derart angeordnet ist, dass infolge der Magnetkraftwirkung zwischen der Magnetanordnung (14) und dem Hystereseelement (20) bei einer Rotation der Antriebswelle (8) ein Drehmoment von der Antriebswelle (8) auf die Abtriebswelle (10) übertragen wird,
**dadurch gekennzeichnet,**
**dass** das rohr- oder hülsenförmige Hystereseelement (20) einen glockenförmigen Grundkörper (22) umfasst, in dessen Innenraum sich die Magnetanordnung (14) hinein erstreckt.

2. Magnetkupplung nach Anspruch 1,
**dadurch gekennzeichnet,**
**dass** das Hystereseelement (20) auf seiner Außenseite Kühlrippen (26) aufweist.

3. Magnetkupplung nach Anspruch 2,
**dadurch gekennzeichnet,**
**dass** die Kühlrippen (26) zur Erzeugung eines das Hystereseelement (20) und/oder die Magnetanordnung (14) beaufschlagenden Kühlluftstroms gewinde- oder rotorblattartig ausgebildet sind.

4. Magnetkupplung nach einem der vorhergehenden Ansprüche,
**dadurch gekennzeichnet,**
**dass** die Magnete (18) der Magnetanordnung (14) zur Bildung eines im Wesentlichen zylindrischen Magnetkörpers auf der Außenseite eines auf der Antriebswelle (8) befestigten Trägerkörpers (16) befestigt sind.

5. Magnetkupplung nach Anspruch 4,
**dadurch gekennzeichnet,**
**dass** der Trägerkörper (16) die Form eines geraden Prismas mit einer polygonalen, insbesondere achteckigen Querschnittsfläche besitzt, auf dessen Umfangsflächen die Magnete (18) insbesondere durch Verkleben oder Vernieten befestigt sind.

6. Magnetkupplung nach Anspruch 5,
**dadurch gekennzeichnet,**
**dass** die Außenseite der Magnete (18) eine kreisbogenförmige Krümmung aufweist, derart, dass die Außenflächen der Magnete (18) entlang einer kreisförmigen Umfangslinie verlaufen, welche der Krümmung der die Magnetkraftwirkung aufnehmenden Innenfläche des Hystereseelements (20) angepasst ist.

7. Magnetkupplung nach einem der vorhergehenden Ansprüche,
**dadurch gekennzeichnet,**
**dass** die Antriebswelle (8) mit der Magnetanordnung (14) und die Abtriebswelle (10) mit dem daran aufgenommenen Hystereseelement (20) fliegend gelagert sind.

8. Magnetkupplung nach einem der vorhergehenden Ansprüche,
**dadurch gekennzeichnet,**
**dass** die Magnetanordnung (14) unmittelbar am freien Ende der Welle (8) eines Elektromotors (4) befestigt ist.

9. Magnetkupplung nach einem der vorhergehenden Ansprüche,
**dadurch gekennzeichnet,**
**dass** Verstellmittel vorgesehen sind, um die Magnetanordnung (14) und das Hystereseelement (20) zur Veränderung des übertragenen Drehmoments in axialer Richtung relativ zueinander zu bewegen.

10. Magnetkupplung nach Anspruch 9,
**dadurch gekennzeichnet,**
**dass** die Verstellmittel wenigstens eine Innengewindehülse (40) sowie einen in diese einschraubbaren Abstandsbolzen (36) umfassen, welche sich am Antriebsmotor (4) und einem der Abtriebswelle (10) zugeordneten Getriebe (2) abstützen.

11. Magnetkupplung nach Anspruch 10,
**dadurch gekennzeichnet,**
**dass** das Hystereseelement (20) als eine drehfest mit der Abtriebswelle (10) gekoppelte und axial zu dieser entlang einer Führung verschiebbare Hülse ausgebildet ist, auf die die Verstellmittel von außen her zum Verschieben derselben wirken.

12. Magnetkupplung nach Anspruch 11,
**dadurch gekennzeichnet,**
**dass** die Verstellmittel ein an der Hülse angeordnetes Lager zur Drehentkopplung umfassen, welches über eine ortsfeste Hebelanordnung (46) in axialer Richtung der Abtriebswelle (10) verschiebbar ist.

13. Magnetkupplung nach Anspruch 12,
**dadurch gekennzeichnet,**
**dass** die Verstellmittel ein Abtastelement (56) zum Erfassen des Wickeldurchmessers umfassen, welches mechanisch oder hydraulisch mit der Hebelanordnung (46) gekoppelt ist, um das über die Magnetkupplung (1) übertragene Drehmoment in Abhängigkeit von dem momentanen Wickeldurchmesser eines auf eine Kabeltrommel (54) aufgewickelten Kabels (52) zu verändern.

14. Magnetkupplung nach Anspruch 13,
**dadurch gekennzeichnet,**
**dass** die Verstellmittel wenigstens eine an einem Drehpunkt befestigte Hebelanordnung (46), bevorzugt mit einer an deren dem Hystereseelement (20) zugeordneten Ende angebrachten Gabel (48), umfasst, welcher manuell, bevorzugt über einen Bowdenzug (50), und/oder automatisch, bevorzugt über ein mit der Hebelanordnung (46) verbundenes Abtastelement (56) betätigbar ist.
